# EUROPEAN PATENT SPECIFICATION

(11) **EP 4 466 797 B1**
(45) Date of publication and mention of the grant of the patent: **03.06.2026**
(21) Application number: 22704283.5
(22) Date of filing: 18.01.2022
(51) Int. Cl.: H04B 7/0413, H04W 24/02, H04L 43/10, H04B 7/06, H04B 7/0408

(54) **ANALYTICS IN VIEW OF DYNAMIC BEAM CONFIGURATIONS**
ANALYTIK IM HINBLICK AUF DYNAMISCHE STRAHLKONFIGURATIONEN
ANALYSE EN VUE DE CONFIGURATIONS DE FAISCEAU DYNAMIQUE

(43) Date of publication of application: 27.11.2024
(73) Proprietor: Nokia Solutions and Networks Oy, 02610 Espoo (FI)
(72) Inventor: HANNÁK, Gábor, 1083 Budapest (HU); SEIDEL, Eiko, 82054 Sauerlach (DE); ALLWANG, Christiane Maria, 80335 Munich (DE)
(74) Representative: Nokia EPO representatives
(86) International application number: PCT/EP2022/050993
(87) International publication number: WO 2023/138752

(56) References cited:
- US-A1- 2019 386 756
- US-A1- 2020 120 602
- US-A1- 2020 274 609

## Description

### Field of the invention

The present disclosure relates to dynamic beam configurations. In particular, it relates to analytics in view of dynamic beam configurations.

### Abbreviations

- 3GPP: 3^{rd} Generation Partnership Project
- 5G/6G/7G: 5^{th}/6^{th}/7^{th} Generation
- 5GC: 5G Core network
- 5GS: 5G System
- AF: Application Function
- AI: Artificial Intelligence
- bClO: Beam-specific Cell-individual Offset
- BF: Beamforming
- CCO: Coverage and Capacity Optimization
- CIO: Cell-individual Offset
- CU: Central Unit
- CUS: Control, User, and Synchronization
- DFT: Discrete Fourier Transform
- DU: Distributed Unit
- EBB: Eigenbeam-Based
- EZF: Eigen based Zero Forcing
- FM: Fault Management
- GoB: Grid-of-Beams
- GRC: GoB Record Collector
- GSDB: GoB Setting Database
- HO: Handover
- KPI: Key Performance Indicator
- LTE: Long-term Evolution
- mMIMO: massive Multiple Input Multiple Output
- MDT: Minimization of Drive Tests
- ML: Machine Learning
- MLB: Mobility Load Balancing
- MRO: Mobility Robustness Optimization
- NM: Network Management
- NR: New radio
- OAM: Operation, Administration, and Maintenance
- O-FH: Open Fronthaul
- O-RAN: Open RAN
- PM: Performance Management
- QoE: Quality-of-Experience
- QoS: Quality-of-Service
- RAN: Radio Access Network
- RIC: RAN Intelligent Controller
- RLF: Radio Link Failure
- RRC: Radio Resource Control
- RSRP: Reference Signal Received Power
- RT: Real Time
- RU: Radio Unit
- SINR: Signal over Interference and Noise Ratio
- SMO: Service Management and Orchestration
- SSB: Synchronization Signal Block
- TE: Too Early
- TL: Too Late
- TS: Traffic Steering
- TS: Technical Specification
- TTT: Time-to-Trigger
- UE: User Equipment

### Background

mMIMO antenna arrays allow for beamforming (BF), i.e., focusing of the wireless signal towards predefined directions, as opposed to spreading the signal in a broad angle. mMIMO transmission and in particular BF has multiple advantages, e.g.,
1. it allows to selectively cover the areas of interest in the cell, or in the extreme case to even selectively focus the signal on individual user equipments (UEs), thereby improving the received signal quality,
2. the BF gain compensates for the less ideal propagation properties (e.g., high path loss) at higher frequencies,
3. directional radiation reduces interference to other UEs/cells and therefore increases the signal to interference and noise ratio (SINR).
4. it is possible to dynamically adjust the beams' geometry and transmission power in order to adapt to the traffic demand and environment.

Different BF techniques exist:
i. Grid-of-Beams (GoB) BF, in which BF vectors are a-priori predefined and stored in a non-volatile memory,
ii. Zero Forcing (ZF) BF, where the optimization goal is to create a beam which points towards the target UE and at the same time minimize the power towards the direction other UEs,
iii. Discrete Fourier Transform (DFT) Beamforming allows to dynamically create a set of orthogonal beams,
iv. Eigen(value)-based (EB) BF, whose goal is to synthetize a beam pointing directly towards a given UE and thereby maximize the signal level provided to that target UE.

A particular configuration of beams employed at the base station (e.g. NR base station) is called GoB or GoB setting/pattern/configuration, which consists of a number of beams, each of which is defined by its geometry (azimuth and elevation beam width, azimuth and elevation beam direction etc.) and transmit power, or by its beam weight. In today's mobile networks, the GoB setting is static. Once the base station is powered on, the cell specific GoB setting will be loaded into the base station. A change of the GoB setting is only possible by rebooting the base station and thus performed only seldomly.

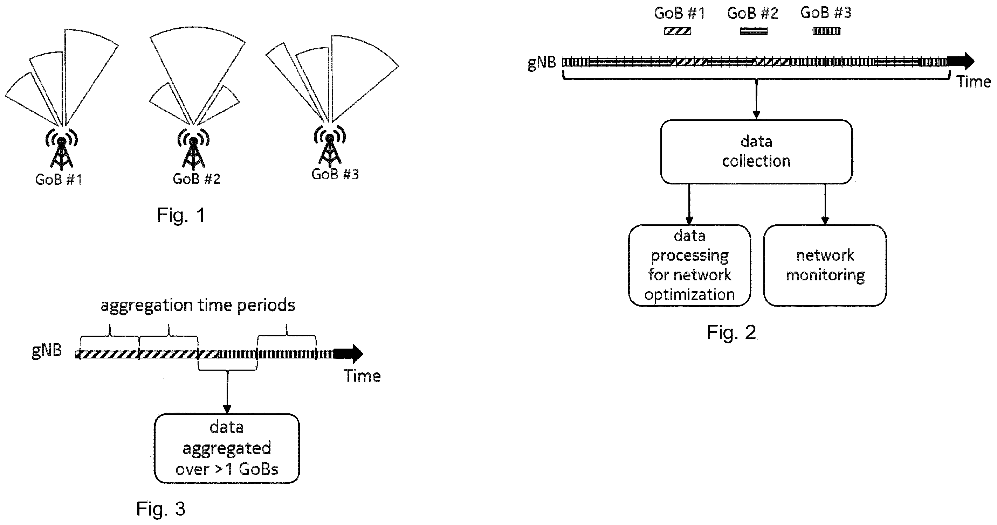

In the future, adaptive BF will be applied, in which BF modes or GoBs are dynamically changed depending on the cell environment and the traffic distribution in the cell, without restarting the base station. E.g., the base station might employ a particular GoB setting in the morning that fits the morning traffic demand in the covered area, and another GoB setting in the afternoon that fits the afternoon traffic demand in that area, and third GoB setting on weekends or at night (see Fig. 1 showing different BF modes). If traffic demand demands it, even more frequent GoB setting changes are possible, in particular in busy, densely populated areas.

Trace/MDT/KPI/PM/FM data collection from the RAN to the network management (NM) entity traditionally assumes a static cell configuration (i.e., the cell's radio parameters are adjusted only manually after lengthy drive tests and simulations, e.g., once every few months or years). Trace/MDT/KPI/PM/FM data is used to monitor the network but is also post-processed in order to configure the network functions and to optimize the network performance (e.g., coverage, QoS, mobility, load balancing).

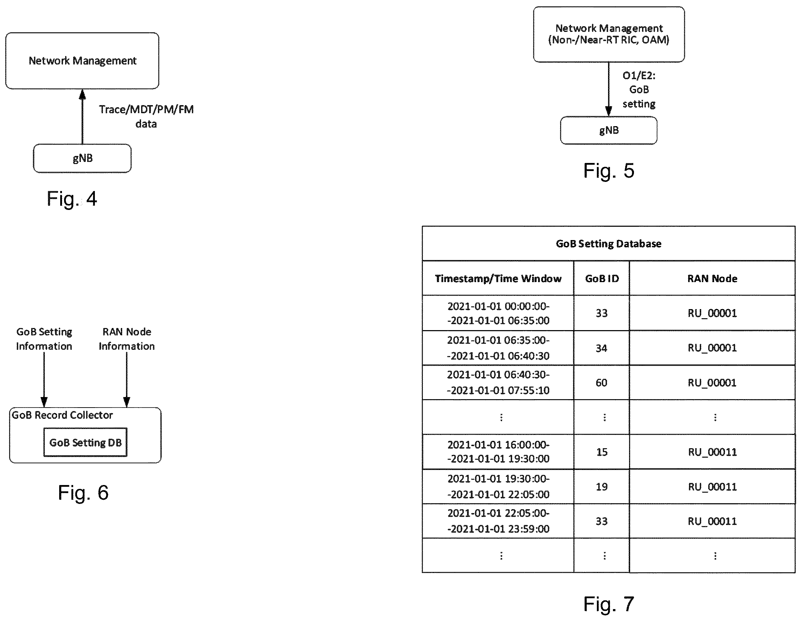

3GPP standards specify Trace/MDT/KPI/PM/FM metrics and configuration values for collection time granularity, e.g.,
- mobility management related performance measurements [3GPP TS 28.552 clause 5.1.1.6],
- performance measurements related to MRO [3GPP TS 28.552 clause 5.1.1.25],
- NG-RAN handover success rate [3GPP TS 28.554 clause 6.6.1],
- RLF reports [3GPP TS 38.300, TS 38.331, TS 37.320, TS 32.422],
- PRB usage for MIMO [3GPP TS 38.314]
- signal/beam strength metrics [3GPP TS 38.331],
- interference related metrics [3GPP TS 38.331],
which are reported by the gNB to the network management (NM) entity that uses the data, e.g., for monitoring, quality assurance, analytics, and network optimization. This is illustrated in Fig. 4.

Based on the collected data, the network automation procedures might derive new parameter configuration sets that will be applied in the network immediately or later (e.g., after a predefined period of time, or based on a trigger).

Today's network deployments are based on fixed GoBs. This means a standard, predefined beamforming pattern is applied in a cell in a static way, irrespective of seasonal or more frequent changes in, e.g., the UE/traffic distribution. In the future, the GoB in a gNB might be adjusted frequently according to the experienced channel properties, UE/traffic distribution etc. in order to optimize the cell coverage and/or cell capacity and/or any operator-defined goal. So far, GoB patterns are switched manually (replacing the GoB transmission file in the Radio Unit).

The GoB to be applied in the gNB can determined manually or by a network management (NM) entity such as the Near-RT RIC (Near-Real Time RAN Intelligent Controller) or Non-RT RIC in O-RAN or the OAM (Operation, Administration, and Maintenance) in 3GPP, based on (automated) network analytics (potentially assisted by AI/ML methods) and optimization. The GoB activation/switch may happen explicitly (explicit signalling) or implicitly (via defining switching conditions in the gNB) or in combination. Relevant configuration can take place from Near-RT RIC over the E2 0 or from Non-RT RIC over the O1 interface 0, respectively. This scheme is illustrated in Fig. 5.

For the disaggregated gNB architecture (wherein the gNB comprises a CU, one or more DUs and a respective RU for each of the DUs), signaling has been specified to update the GoB settings and the beam weights in the RU over the open fronhaul (O-FH) interface. In the O-FH M-Plane 0 non-real time file download to RU is supported and in the O-FH CUS Plane 0 real time beam weight updates are possible.

While initially GoB optimization might be implemented in a proprietary way, operators are pushing for standardized implementations. GoB optimization (optimizing GoB parameters and/or switching between different GoB patterns) is being discussed in O-RAN Alliance standardisation. It is captured in the O-RAN Use Case Analysis Report as well as in the Use Cases Detailed Specification as Use Case #6 00. After an operator survey in O-RAN, massive MIMO Beam Forming Optimization was ranked as top priority use case and the O-RAN Alliance issued an open Call for Proposals. In June 2021 O-RAN has approved a new Work Item on Massive MIMO Beam Forming Optimization. The scope of this Work Item is to specify enhancements to O-RAN interfaces and data models of O1, A1, E2, FH M-plane, FH CUS-Plane, R1 and Near-RT RIC API. E2 interface and E2SM may have to be updated in order to support AI/ML based Massive MIMO BF optimization.

"rApp" is a term defined in O-RAN WG2 Non-RT RIC specifications and means. Non-RT RIC Application. It describes applications that leverage the functionalities available in the Non-RT RIC Framework / SMO Framework to provide value added services related to RAN operation and optimization. The scope of rApps includes, but is not limited to, radio resource management, data analytics, and providing enrichment information. rApps can be deployed and removed. They are fed with input data and their output provide some added value, e.g., optimized network configuration, or processed data for other rApps.

"xApp" is a term defined in O-RAN WG3 Near-RT RIC specifications. Similarly to the rApp, the xApp is an application designed to run on the Near-RT RIC. Such an application is likely to comprise one or more microservices and at the point of onboarding will identify which data it consumes and which data it provides. The application is independent of the Near-RT RIC and may be provided by any third party. The E2 interface enables a direct association between the xApp and the RAN functionality.

### References

[1] O-RAN-WG1.Use Cases Analysis Report v05.00
[2] O-RAN.WG1.Use-Cases-Detailed-Specification-v05.00
[3] O-RAN E2 Service Model - O-RAN.WG3.E2SM-v02.00
[4] O-RAN O1 Interface specification for O-DU 1 - O-RAN.WG5.MP.0
[5] O-RAN Fronthaul Control, User and Synchronization Plane Specification - O-RAN.WG4.CUS.0
[6] O-RAN Management Plane Specification - O-RAN.WG4.MP.0
[7] 3GPP TS 36.902: "Evolved Universal Terrestrial Radio Access Network E-UTRAN); Self-configuring 9 and self-optimizing network (SON) use cases and solutions (Release 9)", Release 9, April 2011
[8] PCT/EP2021/084552, filing date: 7.12.2021; US17/313461, filing date: 6.5.2021

US patent application 2019/386756 A1 discloses techniques for assisting a user equipment in performing measurements of reference signals transmitted via multiple beams.

US patent application 2020/120602 A1 discloses a terminal that performs signal measurements based on a beam sweeping manner of a cell.

US patent application 2020/274609 A1 discloses selecting a beam via which a fixed wireless access (FWA) user equipment (UE) device associated with a provider is able to connect to a base station associated with the provider and using the selected beam to exchange wireless signals between the base station and the FWA UE device.

### Summary

It is an object of the present invention to improve the prior art.

According to a first aspect of the invention that is not claimed, there is provided an apparatus comprising:
one or more processors, and memory storing instructions that, when executed by the one or more processors, cause the apparatus to perform:
reporting, for each of plural times, a respective beam setting adopted by a base station at the respective time.

Each of the times may belong to a respective time window. For each of the time windows, the base station may have adopted the respective beam setting at all of the times belonging to the respective time window; and the instructions, when executed by the one or more processors, may further cause the apparatus to perform the reporting such that, for each of the time windows, the respective beam setting and an indication of the respective time window are reported.

For each of the time windows, the respective indication may comprise at least two of
- a begin of the respective time window;
- a duration of the respective time window; and
- an end of the respective time window.

The instructions, when executed by the one or more processors, may further cause the apparatus to perform: reporting an identifier of the base station related, for each of the plural times, to the respective reported beam setting.

The reporting may be based on an actual beam setting of the base station; or
the reporting may be based on base station internal commands related to the beam setting; or
the reporting may be based on commands related to the beam setting from a network management entity to the base station.

According to a second aspect of the invention that is not claimed, there is provided an apparatus comprising:
one or more processors, and memory storing instructions that, when executed by the one or more processors, cause the apparatus to perform:
receiving, for each of plural times, a respective first indication indicating that a first base station adopted a respective beam setting at the respective time;
storing, in a database, for each of the plural times, the respective beam setting adopted, according to the respective first indication, by the first base station at the respective time along with the respective time;
monitoring whether a request for the beam setting adopted by the first base station in a time period is received;
retrieving, from the database, the one or more beam settings adopted, according to the database, by the first base station in the time period if the request is received;
reporting the retrieved one or more beam settings adopted, according to the database, by the first base station in the time period in a response to the request.

The receiving may comprise receiving a respective indication of one or more time windows, wherein, for each of the time windows, according to the respective indication, the respective beam setting is adopted by the first base station at all times of the respective time window.

The storing may comprise storing, for each of the time windows, the indication of the respective time window along with the respective beam setting adopted, according to the respective indication, by the first base station at all times of the respective time window;

For each of the one or more time windows, the respective indication may comprise at least two of
- a begin of the respective time window;
- a duration of the respective time window; and
- an end of the respective time window.

The instructions, when executed by the one or more processors, may further cause the apparatus to perform:
checking whether, according to the database, the first base station adopted more than one beam settings in the time period;
indicating, for each of the beam settings adopted by the first base station in the time period, a respective portion of the time period if, according to the database, the first base station adopted more than one beam settings in the time period, wherein, according to the database, the base station may have adopted the respective beam setting for the respective portion of the time period.

The instructions, when executed by the one or more processors, may further cause the apparatus to perform:
determining one or more of the time windows overlapping with the time period if, according to the database, the first base station adopted more than one beam settings in the time period, wherein,
for each of the beam settings adopted, according to the database, by the first base station in the time period, the indicating of the respective portion may comprise indicating the respective portion of the time period overlapping with the respective time window.

The instructions, when executed by the one or more processors, may further cause the apparatus to perform:
receiving an identifier of the first base station, wherein
the storing may comprise, for each of the times, storing the identifier in the database related to the respective beam setting; and
the reporting may comprise reporting the identifier related to each of the retrieved one or more beam settings.

The instructions, when executed by the one or more processors, may further cause the apparatus to perform:
determining, for each of the plural times, a respective globally unique identifier identifying the combination of the respective beam setting and the first base station; wherein
the storing may comprise storing, in the database, for each of the plural times, the respective globally unique identifier and the respective time.

The instructions, when executed by the one or more processors, may further cause the apparatus to perform:
receiving, for each time of at least a subset of the plural times, a respective second indication indicating that a second base station different from the first base station adopted a respective beam setting at the respective time;
storing, in the database, for each of the times of the subset, the respective beam setting adopted, according to the respective second indication, by the second base station at the respective time along with the respective time and an identifier of the second base station;
storing, in the database, for each of the plural times, an identifier of the first base station along with the respective beam setting adopted, according to the respective first indication, by the first base station at the respective time and the respective time;
monitoring whether the received request requests for the beam setting adopted by the second base station in the time period;
retrieving, from the database, the one or more beam settings adopted, according to the database, by the second base station in the time period if the received request requests for the beam setting adopted by the second base station in the time period;
reporting the retrieved one or more beam settings adopted, according to the database, by the second base station in the time period in the response to the request.

According to a third aspect of the invention, there is provided an apparatus comprising:
one or more processors, and memory storing instructions that, when executed by the one or more processors, cause the apparatus to perform:
inquiring, from a database, for each of plural time periods, one or more respective beam settings adopted by the base station within the respective time period;
receiving, from the database in a response to the inquiring, for each of the plural time periods, the one or more respective beam settings adopted by the base station within the respective time period;
selecting one of the beam settings, wherein, according to the response, the selected beam setting was adopted by the base station within at least one of the plural time periods;
determining one or more of the plural time periods such that, according to the response, the base station adopted the selected beam setting in the determined one or more of the plural time periods;
monitoring whether, for each of the determined one or more time periods of the plural time periods, respective input data are received;
executing a network function on the input data of the determined one or more time periods if the respective input data are received for each of the determined one or more of the plural time periods;
inhibiting the executing the network function on the input data of each of the plural time periods different from any of the determined one or more time periods.

The determining the one or more of the plural time periods may comprise determining all of the plural time periods when, according to the response, the base station adopted the selected beam setting.

The instructions, when executed by the one or more processors, may further cause the apparatus to perform:
checking, for each of the determined time periods, if, according to the response, the base station adopted more than one beam settings in the respective determined time period;
inhibiting, for each of the determined time periods, the executing the network function on the input data of the determined time period if, according to the response, the base station adopted more than one beam settings in the respective determined time period.

The instructions, when executed by the one or more processors, may further cause the apparatus to perform:
checking, for each of the determined time periods, if, according to the response, the base station adopted more than one beam settings in the respective determined time period; and,
for each of the determined time periods, if, according to the response, the base station adopted more than one beam settings in the respective determined time period:
   determining a portion of the respective determined time period for which, according to the response, the base station adopted the selected beam setting in the respective determined time period;
   weighting the input data of the respective determined time period by the determined portion; and
   executing the network function on the weighted input data of the respective determined time period.

The response may indicate, for each of the beam settings, a respective time window for which the base station adopted the respective beam setting.

The response may comprise an identifier of the base station.

The instructions, when executed by the one or more processors, may further cause the apparatus to perform:
checking if a result of the executing the network function depends on the beam settings;
inhibiting the inquiring if the result of the executing the network function does not depend on the beam settings.

The network function may comprise an analytics function. For example, the analytics function may comprise at least one of a mobility robustness optimization, a mobility load balancing, a traffic steering, a coverage optimization, and a capacity optimization.

According to a fourth aspect of the invention that is not claimed, there is provided a method comprising:
reporting, for each of plural times, a respective beam setting adopted by a base station at the respective time.

Each of the times may belong to a respective time window;
for each of the time windows, the base station may have adopted the respective beam setting at all of the times belonging to the respective time window; and
the reporting may be performed such that, for each of the time windows, the respective beam setting and an indication of the respective time window are reported.

For each of the time windows, the respective indication may comprise at least two of
- a begin of the respective time window;
- a duration of the respective time window; and
- an end of the respective time window.

The method may further comprise:
reporting an identifier of the base station related, for each of the plural times, to the respective reported beam setting.

The reporting may be based on an actual beam setting of the base station; or
the reporting may be based on base station internal commands related to the beam setting; or
the reporting may be based on commands related to the beam setting from a network management entity to the base station.

According to a fifth aspect of the invention that is not claimed, there is provided a method comprising:
receiving, for each of plural times, a respective first indication indicating that a first base station adopted a respective beam setting at the respective time;
storing, in a database, for each of the plural times, the respective beam setting adopted, according to the respective first indication, by the first base station at the respective time along with the respective time;
monitoring whether a request for the beam setting adopted by the first base station in a time period is received;
retrieving, from the database, the one or more beam settings adopted, according to the database, by the first base station in the time period if the request is received;
reporting the retrieved one or more beam settings adopted, according to the database, by the first base station in the time period in a response to the request.

The receiving may comprise receiving a respective indication of one or more time windows, wherein, for each of the time windows, according to the respective indication, the respective beam setting is adopted by the first base station at all times of the respective time window.

The storing may comprise storing, for each of the time windows, the indication of the respective time window along with the respective beam setting adopted, according to the respective indication, by the first base station at all times of the respective time window;

For each of the one or more time windows, the respective indication may comprise at least two of
- a begin of the respective time window;
- a duration of the respective time window; and
- an end of the respective time window.

The method may further comprise:
checking whether, according to the database, the first base station adopted more than one beam settings in the time period;
indicating, for each of the beam settings adopted by the first base station in the time period, a respective portion of the time period if, according to the database, the first base station adopted more than one beam settings in the time period, wherein, according to the database, the base station adopted the respective beam setting for the respective portion of the time period.

The method may further comprise:
determining one or more of the time windows overlapping with the time period if, according to the database, the first base station adopted more than one beam settings in the time period, wherein,
for each of the beam settings adopted, according to the database, by the first base station in the time period, the indicating of the respective portion may comprise indicating the respective portion of the time period overlapping with the respective time window.

The method may further comprise:
receiving an identifier of the first base station, wherein
the storing may comprise, for each of the times, storing the identifier in the database related to the respective beam setting; and
the reporting may comprise reporting the identifier related to each of the retrieved one or more beam settings.

The method may further comprise:
determining, for each of the plural times, a respective globally unique identifier identifying the combination of the respective beam setting and the first base station; wherein
the storing may comprise storing, in the database, for each of the plural times, the respective globally unique identifier and the respective time.

The method may further comprise:
receiving, for each time of at least a subset of the plural times, a respective second indication indicating that a second base station different from the first base station adopted a respective beam setting at the respective time;
storing, in the database, for each of the times of the subset, the respective beam setting adopted, according to the respective second indication, by the second base station at the respective time along with the respective time and an identifier of the second base station;
storing, in the database, for each of the plural times, an identifier of the first base station along with the respective beam setting adopted, according to the respective first indication, by the first base station at the respective time and the respective time;
monitoring whether the received request requests for the beam setting adopted by the second base station in the time period;
retrieving, from the database, the one or more beam settings adopted, according to the database, by the second base station in the time period if the received request requests for the beam setting adopted by the second base station in the time period;
reporting the retrieved one or more beam settings adopted, according to the database, by the second base station in the time period in the response to the request.

According to a sixth aspect of the invention, there is provided a method comprising:
inquiring, from a database, for each of plural time periods, one or more respective beam settings adopted by the base station within the respective time period;
receiving, from the database in a response to the inquiring, for each of the plural time periods, the one or more respective beam settings adopted by the base station within the respective time period;
selecting one of the beam settings, wherein, according to the response, the selected beam setting was adopted by the base station within at least one of the plural time periods;
determining one or more of the plural time periods such that, according to the response, the base station adopted the selected beam setting in the determined one or more of the plural time periods;
monitoring whether, for each of the determined one or more time periods of the plural time periods, respective input data are received;
executing a network function on the input data of the determined one or more time periods if the respective input data are received for each of the determined one or more of the plural time periods;
inhibiting the executing the network function on the input data of each of the plural time periods different from any of the determined one or more time periods.

The determining the one or more of the plural time periods may comprise determining all of the plural time periods when, according to the response, the base station adopted the selected beam setting.

The method may further comprise:
checking, for each of the determined time periods, if, according to the response, the base station adopted more than one beam settings in the respective determined time period;
inhibiting, for each of the determined time periods, the executing the network function on the input data of the determined time period if, according to the response, the base station adopted more than one beam settings in the respective determined time period.

The method may further comprise:
checking, for each of the determined time periods, if, according to the response, the base station adopted more than one beam settings in the respective determined time period; and,
for each of the determined time periods, if, according to the response, the base station adopted more than one beam settings in the respective determined time period:
   determining a portion of the respective determined time period for which, according to the response, the base station adopted the selected beam setting in the respective determined time period;
   weighting the input data of the respective determined time period by the determined portion; and
   executing the network function on the weighted input data of the respective determined time period.

The response may indicate, for each of the beam settings, a respective time window for which the base station adopted the respective beam setting.

The response may comprise an identifier of the base station.

The method may further comprise:
checking if a result of the executing the network function depends on the beam settings;
inhibiting the inquiring if the result of the executing the network function does not depend on the beam settings.

The network function comprises an analytics function. The analytics function may comprise at least one of a mobility robustness optimization, a mobility load balancing, a traffic steering, a coverage optimization, and a capacity optimization.

Each of the methods of the fourth to sixth aspects may be a method of dynamic beam configuration.

According to a seventh aspect, there is provided a computer program product comprising a set of instructions which, when executed on an apparatus, is configured to cause the apparatus to carry out the method according to the fourth (not claimed), fifth (not claimed) or sixth aspect. The computer program product may be embodied as a computer-readable medium or directly loadable into a computer.

According to some example embodiments of the invention, at least one of the following advantages may be achieved:
- reliable results of analytics functions and other optimization applications in case of dynamic beam adaptations.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 illustrates schematic representations of different GoB settings employed by a same gNB;
Fig. 2 illustrates (Trace/MDT/KPI/PM/FM) data collection and subsequent monitoring and post-processing for network configuration and performance optimization;
Fig. 3 illustrates aggregated (Trace/MDT/KPI/PM/FM) data collection with an aggregation time period containing a change in GoB setting;
Fig. 4 illustrates RAN data collection;
Fig. 5 illustrates that the GoB to be employed by the gNB is determined explicitly or implicitly by a Network Management entity;
Fig. 6 shows an apparatus according to some example embodiments of the invention;
Fig. 7 illustrates an example of records in a GoB Setting database according to some example embodiments of the invention;
Fig. 8 illustrates actions according to a method according to some example embodiments of the invention;
Fig. 9 illustrates actions performed by the GoB Record Collector (GRC) to maintain the GoB Setting Database (GSDB) according to some example embodiments of the invention;
Fig. 10 illustrates GoB identifier query steps on the GoB Record Collector side according to some example embodiments of the invention;
Fig. 11 illustrates a method performed by an analytics function (or any other network function) according to some example embodiments of the invention;
Fig. 12 shows a beam-based Mobility Robustness Optimization deployment in the O-RAN Architecture according to some example embodiments of the invention;
Fig. 13 shows another beam-based Mobility Robustness Optimization deployment in the O-RAN Architecture according to some example embodiments of the invention;
Fig. 14 shows still another beam-based Mobility Robustness Optimization deployment in the O-RAN Architecture according to some example embodiments of the invention;
Fig. 15 shows yet another beam-based Mobility Robustness Optimization deployment in the O-RAN Architecture according to some example embodiments of the invention;
Fig. 16 shows a beam-based Mobility Robustness Optimization deployment in the 3GPP architecture according to some example embodiments of the invention;
Fig. 17 shows an apparatus according to an example embodiment of the invention;
Fig. 18 shows a method according to an example embodiment of the invention;
Fig. 19 shows an apparatus according to an example embodiment of the invention.
Fig. 20 shows a method according to an example embodiment of the invention;
Fig. 21 shows an apparatus according to an example embodiment of the invention;
Fig. 22 shows a method according to an example embodiment of the invention; and
Fig. 23 shows an apparatus according to an example embodiment of the invention.

### Detailed description of certain embodiments

Herein below, certain example embodiments of the present invention are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

A change of the GoB might adapt (in particular: extend or reduce) the cell coverage area. This might not only impact the cell coverage of the own cell but also the interference generated to its neighbor cells. In other words, while an increased coverage of the beam is advantageous for the own cell, it might create extensive interference in the neighbor cells. One of the consequences is that the coverage situation in the cell edge region may change significantly.

While dynamic GoB adaptation provides benefits as explained before, once achieved, it will pose challenges for other existing procedures of the overall system because many other analytic functions assume a static mMIMO configuration (in particular: a static GoB) and are not aware of GoB setting changes. Today, interactions between GoB setting changes with network automation procedures running on top of the GoB optimization algorithm (e.g., Mobility Robustness Optimization) are not considered.

More specifically: A number of other (network) automation procedures are based on network statistics, and changing GoBs will negatively impact if not eliminate the reliability of such statistics. E.g., convergence of the underlying algorithms is in general not guaranteed anymore. Examples of procedures that are affected by regular changes of the GoB are Cell Coverage Optimization, Mobility Load Balancing, Mobility Robustness Optimization, Energy Saving, QoE/QoS optimization, etc. Moreover, the GoB BF optimization function is itself a function that is impacted by this problem, i.e., the (near-)real time and GoB setting specific network measurements based on which a switch to the next GoB setting shall be optimally determined are not necessarily available.

Trace/MDT/KPI/PM/FM data collection from the RAN to the network management (NM) entity traditionally assumes a static cell configuration (i.e., the cell's radio parameters are adjusted only manually after lengthy drive tests and simulations, e.g., once every few months or years). Trace/MDT/KPI/PM/FM data is used to monitor the network but is also post-processed in order to configure the network functions and to optimize the network performance (e.g., coverage, QoS, mobility, load balancing). However, in a mMIMO gNB which frequently switches between GoB patterns, many performance metrics lose their meaning if they are collected across different GoBs and post-processed without separation. Any analytics function that ingests for example mobility related counters such as requested, successful or failed handover (HO) preparations (3GPP TS 28.552), or mobility robustness optimization (MRO) related parameters such as handover failure counters 'too early (TE)', 'too late (TL)', 'to wrong cell' (3GPP TS 28.552 and TS 38.300), or radio link failure (RLF) or RRC Connection Establishment Failure (RCEF) reports (3GPP TS 32.422, TS 28.622, TS 38.331), would fail if the respective ingested data is an unknown mix of Trace/MDT/KPI/PM/FM counters collected at times when different GoBs were active, as shown in Fig. 2. In Fig. 2, different hatchings on the time line represent different GoB settings.

Moreover, for Trace/MDT/KPI/PM/FM values which represent an aggregated measurement over a longer, predefined period of time (e.g., they equal a weighted sum of many individual measurements over 15 minutes), the Trace/MDT/KPI/PM/FM values will represent a mixture of different GoBs if the GoB was switched during the aggregation time period, as shown in Fig. 3. As in Fig. 2, in Fig. 3 different hatchings on the time line represent different GoB settings.

Based on the collected data, the network automation procedures might derive some new parameter configuration sets. The new parameter configuration sets may be applied immediately or after a substantial period of time. While this new setting might be optimized for a certain, older GoB setting (e.g., for that corresponding to the data collection period), it might actually degrade performance when later applied to a different GoB setting. To avoid unstable network behaviour, the state-of-the-art approach is to consolidate measurements and parameters over a very long time (in this case this would mean consolidation over all applied or potential GoB settings) and then optimize a network setting. Nevertheless, these network settings will remain sub-optimal because an optimium setting on a per-GoB configuration can not be derived.

Note that there are at least two different aspects which might cause problems if GoB is changed: First, the network optimization procedure is not aware which GoB to associate to a certain measurement. Second, if the performance metric is aggregated over a longer time period and if the GoB setting is switched within this time period, the metric represents the characteristics of a mix of different GoB settings.

An operator may try to perform some network analytics/network optimization despite the fact that the required measurements and analytics results are not available with the necessary granularity for the respective procedure. Then, the new network settings may easily be misaligned, as they would rely on invalid network statistics. This will lead to lousy performance if not a useless setting.

As another option, an operator may perform the network analytics/network optimization (such as the GoB BF optimization) within the gNB. However, this option has many drawbacks. For example, the gNB typically does not have the necessary computational capacity to perform advanced (e.g., Al/ML driven) optimization; and, if this optimization is local to the gNB, it would lead to coverage and mobility conflicts between neighboring cells. Moreover, this solution renders multi-cell optimization impossible or at least difficult.

Some example embodiments of the invention provide a GoB setting database (GSDB) storing records comprising used GoB settings and associated times. The GoB setting database may be specific for each RAN node (gNB) or may comprise the GoB settings of several RAN nodes (or node types). In the latter case, each record of a GoB setting and an associated time comprises an identifier of the respective RAN node, too. The records may comprise time windows during which the respective GoB setting is constant, or they may comprise the respective GoB setting for each of plural times. The GSDB may receive the content of the records from the RAN node(s) or from NM, based on the commands sent to the RAN node(s).

Upon receipt of a query (e.g. from an analytics function), the GSDB may provide the GoB setting active at a RAN node and at a given time.

Fig. 6 depicts an apparatus according to some example embodiments of the invention. It comprises the GSDB and the GoB Record Collector (GRC). The GRC receives as input
a) GoB Settings Information with associated time information,
b) RAN Node Information (at least, if the GSDB is related to several RAN nodes).

These pieces of information may be received from the RAN node itself or the NM entity based on the commands sent to the RAN node(s). The GoB Settings Information identifies the GoB setting that is activated at some point in time in a certain RAN node explicitly (e.g., by the GoB file deployed at the RU) or implicitly (e.g., with a list of GoB setting identifiers (GoB IDs) and switching conditions such as dates and times). The RAN Node Information is used to identify the RAN node at which a given GoB setting is applied, and, additionally, it may contain information about the type of RU and the relevant physical elements used at the RAN node (frequency bands, antenna array dimensions and types etc.).

Using the GoB Settings Information and the RAN Node Information the GRC maintains a global GoB Setting Database (GSDB), which contains the GoB settings associated to the RAN nodes (or node types) and time windows or timestamps.

The GoB settings in the global GSDB are unique, i.e., two distinct GoB IDs denote two different physical GoB settings, and a GoB ID always denotes a unique physical GoB setting. However, the same GoB ID may be used by different RAN Nodes, as shown in the example of Fig. 7.

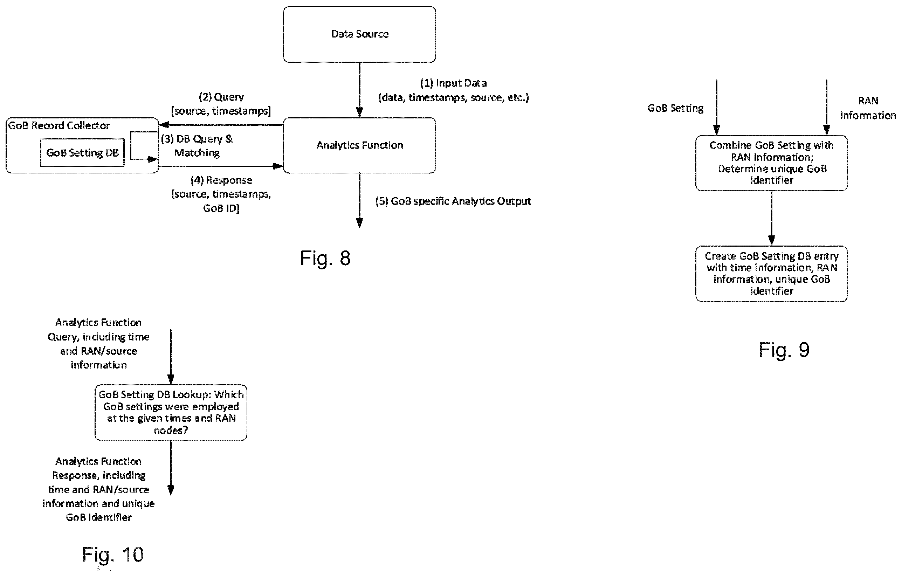

Fig. 8 depicts a method according to an example embodiment of the invention. It comprises the following actions:
1. An Analytics Function receives input data from a data source. The input data comprise the data itself, associated timestamps, and sources. They may comprise additional contextual information.
2. The Analytics Function sends a query to the GRC comprising the source-timestamp (or source-time window) pairs which are contained in its input data as query parameters.
3. The GRC performs a DB query and matching and finds for all source-timestamp (or -time window) pairs the associated GoB identifier.
4. The GRC responds to the query to the Analytics Function with the source-timestamp-GoB ID triplets (or -time window-).
5. Using the received GoB IDs, the Analytics Function can distinguish between input data that are associated with different GoB settings and calculate, for at least one of the GoB settings, a GoB setting specific Analytics Output. Typically, the GoB setting specific Analytic Output is calculated for all GoB settings provided by the GRC in response to the query.

In the method of Fig. 8, it is assumed that the GSDB stores the records of plural RAN nodes (data sources). If each of the RAN nodes has a specific GSDB, GRC identifies the respective GSDB for each data source and submits a query to each of the identified GSDBs with the time stamp (or time window) as a query parameter.

For time windows queried by the Analytics Function which contained a GoB setting switch at the respective RAN node, the response may contain multiple GoB IDs, each annotated with an indication which GoB setting was active for how long in that time window. E.g., for *KPI_A1,* which is a counter which per definition is being periodically incremented every 15 minutes, then recorded, and then reset to 0, a GoB setting switch may happen within one of the 15 minute time windows. If the (2) query contains the given source and the given time window, the GRC may (4) respond with [*GoB_ID_1: first 600* s; *GoB_ID_2: last 300 s*]. The analytics function may use this information to either discard the input data of the respective time window, or to weight the input data of the respective time window according to the portions of the respective GoB settings and to use the weighted input data in the calculation of the respective GoB setting specific Analytics output.

Hereinafter, some example embodiments of the invention are described at greater detail for a case that the GSDB stores records for plural RAN nodes. If the GSDB is specific for each RAN Node, the RAN node information may be omitted in the below description.

The GoB Record Collector (GRC) takes three types of inputs:
1. GoB setting information with associated time stamps (time windows), for storing in the GSDB,
2. RAN node information, for storing in the GSDB, and
3. a list of one or more time windows/timestamps and RAN Node identifiers as query parameters.

The GoB Setting Information is used to uniquely identify the GoB setting in the RAN node and may be, e.g., a beam weight file, a list of beam parameters (beam horizontal/vertical width, elevation, azimuth, power), or a list of these together with a reference to an already predefined list, etc. The RAN Node Information may identify the RAN node type and configuration, e.g., mMIMO antenna array geometry (layout, no. of antennas horizontally/vertically, polarization etc.), power settings, frequency ranges etc.

The scope of the GRC may be at least one of
1. to correlate GoB settings of different RAN nodes in order to determine which GoB settings are equivalent, even if employed at different RAN nodes, and which are different, even if employed at the same RAN nodes (see Fig. 10), and
2. to create and maintain a database (the GoB Setting DB (GSDB)) with timestamped records of globally uniqe GoB settings and the corresponding RAN Node Information.

Through 1., a globally unique GoB setting (GoB ID) may be achieved. The globally unique GoB setting (GoB ID) representation is useful because two GoB settings differently represented at the RAN nodes may be physically (or otherwise) equivalent, e.g., if they are employed at different types of RUs. Equivalently, two GoB settings identically represented at the RAN nodes may be in fact not equivalent if they are employed at different RAN node types. If the representation of the GoB settings at the RAN nodes is made such that equivalent GoB settings have the same representation and non-equivalent GoB settings have different representations, the correlation of 1. may be omitted.

For many network functions, such as an Analytics Function which performs analytics on historical network data, the separation of the input data according to different GoB settings can be beneficial or even necessary (e.g., Mobility Robustness Optimization (MRO), Mobility Load Balancing (MLB), Traffic Steering (TS), Coverage and Capacity Optimization (CCO) etc.). For example, the input to MRO is long term observations of handover (HO) statistics between a pair of neighboring cells (such as Too Early, Too Late, Attempted, Failed, Pingpong), based on which the MRO determines HO offsets, which then delay or advance HOs in order to lower the number problematic HO events ([8]). With a mMIMO system that employs different BF modes (such as different GoB settings), the aggregated long-term statistics is a useless input to the MRO, because the radio conditions between the neighboring cells and thus the HO behavior will be substantially different for different GoB settings. However, by separating the long-term statistics (the input to the MRO) along different GoB settings, different and individually optimal MRO and HO settings can be derived by the MRO Analytics Function.

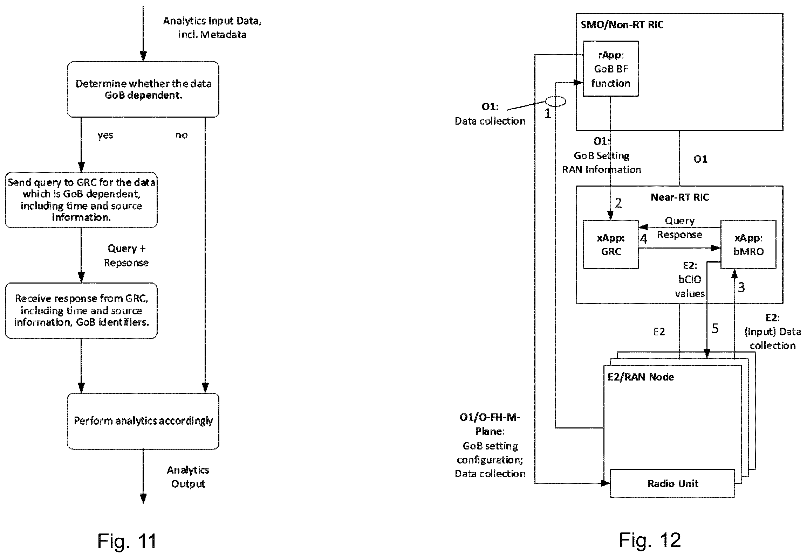

Therefore, any network function (Analytics Function) which ingests historical RAN data, can send a query to the GRC entity. In the query, it sends to the GRC the metadata of the input data on which it performs the query, i.e., at least the source(s) and the timestamps or time windows of the input data. The GRC performs the GSDB lookup and responds with the unique GoB setting identifiers associated to those times and sources (see Fig. 10). The Analytics Function can then perform its analytics according to whether its algorithm is GoB setting dependent or not, and if yes, then, it can perform the analytics on a per-GoB setting basis. The Analytics Function may even decide whether or not its analytics is GoB setting dependent prior to querying the GRC and query the GRC only if the analytics is GoB setting dependent, as illustrated in Fig. 11.

As an example embodiment, beam based MRO (bMRO) is described at greater detail:
Mobility Robustness Optimization (MRO) is a legacy Rel.9 LTE feature 0: it aims at optimizing mobility performance, i.e., lower the rate of failed/too early (TE)/too late (TL) handovers (HOs) and pingpong anomalies. Originally, the HO decision is made based on comparing the UE-measured RSRP values of the received cell signals (and some timing/triggering conditions). Close to a cell border (i.e., in the "transition" region between two neighboring cells), the RSRP values are approximately equal, and HOs may happen too early, too late, may fail, or suffer a pingpong anomaly. The probability of such HO failures can be decreased by introducing positive or negative RSRP offsets, called cell-individual offsets (CIOs), in the HO decision, which make HOs more robust. One CIO value denotes the offset to be applied on the RSRP difference of two neighboring cells upon a HO from the source cell to the target cell. Thus, usually, one base station stores multiple CIO values according to the number of its neighbor cells to which a served UE could move. The CIO values are usually determined and adjusted by simple heuristics based of the failure counters.

Beam-based MRO was introduced in [8]. In a beamformed mMIMO cell with multiple beams covering different regions, the cell-to-cell borders/HOs break down to beam-to-cell borders/HOs, as the HO procedure is different based on the specific serving beam of the source cell. Therefore, the CIOs not only depend on the source and the target cell, but on the beam of the source cell and the beam of the target cell. These CIOs are called beam-specific CIOs (bClOs).

With GoB BF, when different beams/beam sets are employed at the mMIMO base station, the radiated beams, and so the relationship to the neighboring cells, change. Therefore, different bCIOs will be necessary for different GoB settings.

Fig. 12 illustrates a GoB BF and bMRO deployment option in the O-RAN architecture. The bMRO xApp's goal is to determine optimal bClO values based on beam-specific HO counters. In order for the bMRO xApp to be able to determine the bCIOs on a GoB setting basis, it requests the GoB IDs from the GRC xApp. The actions are as follows:
1. The GoB BF function is an rApp residing in the SMO/Non-RT RIC. It collects input data for determining the optimal GoB setting for the E2 Node(s) over the O1 interface, and transfers/configures the determined GoB setting to the E2 Node (i.e. RAN node, base station) over the O1 interface.
2. The GRC resides as an xApp in the Near-RT RIC and receives GoB settings information and RAN information from the GoB BF rApp (possibly simultaneously with the GoB BF rApp configuring the E2 Node) over the O1 interface.
3. The bMRO function resides in the Near-RT RIC as an xApp analytics function. It collects input data (beam specific HO counters such as failed/TE/TL/pingpong) from the E2 Node(s) over the E2 interface, and its goal is to determine optimal bClO values for each beam of the E2 Node.
4. The input data to the bMRO function is not associated with beams or beam sets, and a per-beam or per-beam set processing of the collected input data is not possible. Therefore it sends a query with the associated input data source and time information to the GRC xApp which then responds with unique GoB IDs associated to the bMRO's input data. (The query and response are performed over Near-RT RIC's internal messaging service.) Based on this response, the bMRO can associate its input data (beam specific HO counters) to different GoB settings, and perform its analytics on a GoB setting basis.
5. The bMRO determines and transfers (or configures) the GoB setting specific BCIO values to the E2 Node(s) over the E2 interface.

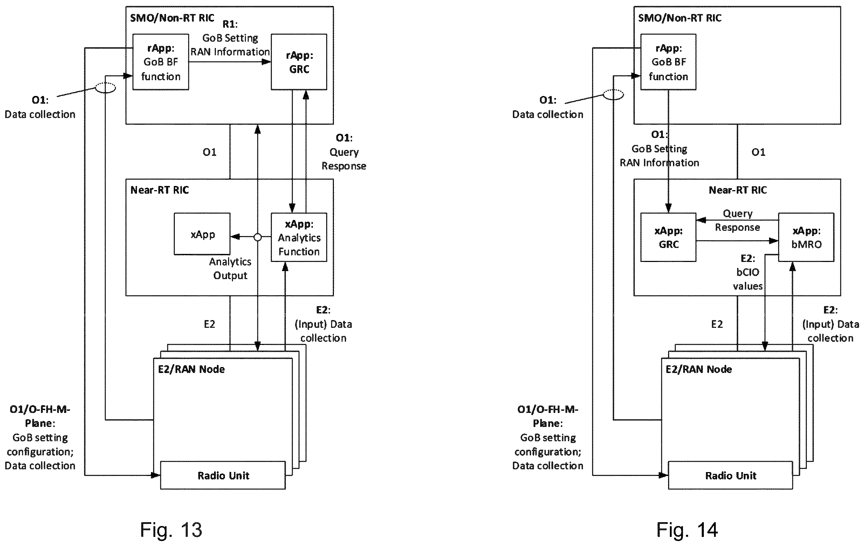

Figs. 13 to 15 show further options how the functions depicted in Fig. 12 may be mapped in the O-RAN framework according to some example embodiments of the invention:
As shown in Fig. 13, the GRC is an rApp residing in the SMO/Non-RT RIC while the Analytics Function is an xApp residing in the Near-RT RIC. The GoB BF function is an rApp and configures the GoB setting in the E2/RAN Node over the O1 interface, while it transmits the GoB setting information and the RAN information directly or indirectly to the GRC rApp. The GRC Query/Response is communicated over the O1 interface between the Non-RT RIC and the Near-RT RIC.

The Analytics Function can ingest input data from other xApps or from an external party, or from rApps, or from the E2/RAN Node over the E2 interface. Its output may be ingested, similarly, by other xApps, by the SMO/Non-RT RIC (and further rApps), or the E2/RAN Nodes.

As shown in Fig. 14, the GRC is an xApp residing in the Near-RT RIC while the Analytics Function is an rApp residing in the Non-RT RIC. The GoB BF function is an xApp and configures the GoB setting in the E2/RAN Node over the E2 interface, while it transmits the GoB setting information and the RAN information directly or indirectly to the GRC xApp. The GRC Query/Response is communicated over the O1 interface between the Non-RT RIC and the Near-RT RIC.

The Analytics Function can ingest input data from other rApps or from an external party, or from xApps, or from the E2/RAN Node over the O1 interface. Its output may be ingested, similarly, by other rApps, by the Near-RT RIC (and further xApps), or the E2/RAN Nodes.

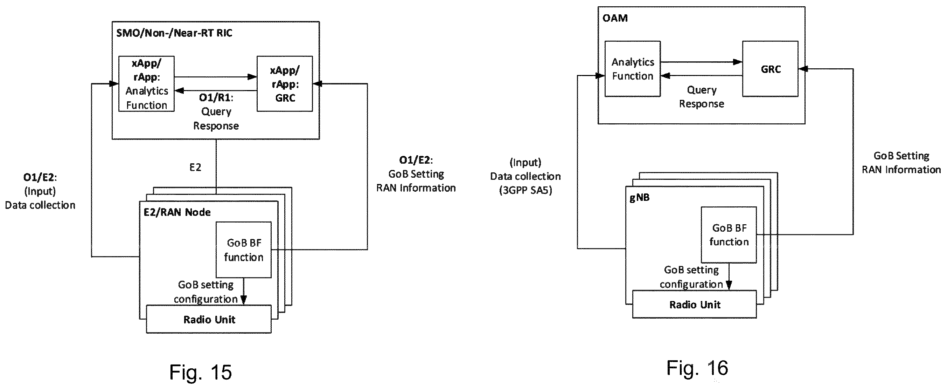

As shown in Fig. 15, the GoB BF function is internal to the E2/RAN Node. There are four implementation options:
- 1a: The GRC and the Analytics Function are both rApps in the Non-RT RIC. Then, information between the GoB BF function and the rApps is exchanged over the O1 interface, while the R1 interface facilitates communication between the GRC and the Analytics Function.
- 1b: The GRC is an xApp in the Near-RT RIC, while the Analytics Function is an rApp in the Non-RT RIC. Then, information between the GoB BF function and the GRC xApp is exchanged over the E2 interface, while the O1 interface facilitates communication between the GRC and the Analytics Function rApp.
- 2a: The GRC is an rApp in the Non-RT RIC, while the Analytics Function is an xApp in the Near-RT RIC. Then, information between the GoB BF function and the GRC rApp is exchanged over the O1 interface and the O1 interface facilitates communication between the GRC and the Analytics Function xApp.
- 2b: The GRC and the Analytics Function are both xApps and reside in the Near-RT RIC. Then, information between the GoB BF function and the xApps is exchanged over the E2 interface, while the Near-RIC internal messaging service facilitates communication between the GRC and the Analytics Function xApps.

The Analytics Function can ingest input data from rApps/xApps or from an external party, or from the E2/RAN Node over the O1/E2 interface. Its output may be ingested, similarly, by other rApps/xApps, by the SMO/Non-/Near-RT RIC, or the E2/RAN Nodes.

Fig. 16 illustrates another example embodiment mapped to the 3GPP architecture. The GoB BF function is internal to the gNB, while the GRC and the Analytics Function reside in the OAM.

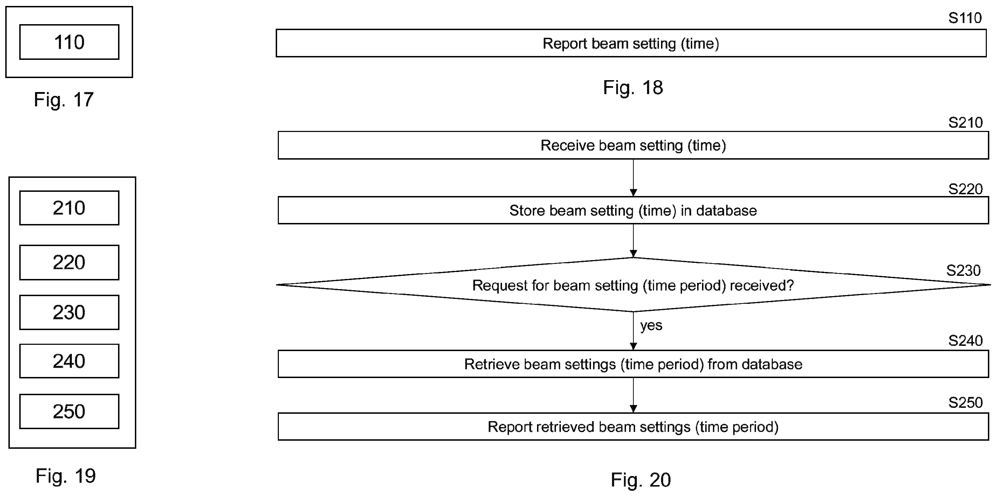

Fig. 17 shows an apparatus according to an example embodiment of the invention that is not claimed. The apparatus may be a base station, such as a gNB or eNB, or a network management entity, or an element of one of them. Fig. 18 shows a method according to an example embodiment of the invention that is not claimed.

The apparatus according to Fig. 17 may perform the method of Fig. 18 but is not limited to this method. The method of Fig. 18 may be performed by the apparatus of Fig. 17 but is not limited to being performed by this apparatus.

The apparatus comprises means for reporting 110. The means for reporting 110 may be a reporting means. The means for reporting 110 may be a reporter. The means for reporting 110 may be a reporting processor.

The means for reporting 110 reports, for each of plural times, a respective beam setting adopted by a base station at the respective time (S110). Such reporting may be based on the actual beam setting of the base station, base station internal commands related to the beam setting (e.g. between DU and RU), or based on commands related to the beam setting from a network management entity to the base station.

Fig. 19 shows an apparatus according to an example embodiment of the invention that is not claimed. The apparatus may be a record collector, such as a GRC, or an element thereof. Fig. 20 shows a method according to an example embodiment of the invention that is not claimed. The apparatus according to Fig. 19 may perform the method of Fig. 20 but is not limited to this method. The method of Fig. 19 may be performed by the apparatus of Fig. 20 but is not limited to being performed by this apparatus.

The apparatus comprises means for receiving 210, means for storing 220, means for monitoring 230, means for retrieving 240, and means for reporting 250. The means for receiving 210, means for storing 220, means for monitoring 230, means for retrieving 240, and means for reporting 250 may be a receiving means, storing means, monitoring means, retrieving means, and reporting means, respectively. The means for receiving 210, means for storing 220, means for monitoring 230, means for retrieving 240, and means for reporting 250 may be a receiver, storage device, monitor, retriever, and reporter, respectively. The means for receiving 210, means for storing 220, means for monitoring 230, means for retrieving 240, and means for reporting 250 may be a receiving processor, storing processor, monitoring processor, retrieving processor, and reporting processor, respectively.

For each of plural times, the means for receiving 210 receives a respective first indication (S210). The respective first indication indicates that a first base station adopted a respective beam setting at the respective time. For each of the plural times, the means for storing 220 stores the respective beam setting along with the respective time in a database, such as a GSDB (S220). I.e., the means for storing 220 stores the beam setting which, according to the respective first indication, is adopted by the first base station at the respective time along with the respective time.

The means for monitoring 230 monitors whether a request for the beam setting adopted by the first base station in a time period is received (S230). If the request is received (S230 = yes), the means for retrieving 240 retrieves, from the database, the one or more beam settings of the time period (S240). I.e., the means for retrieving 240 retrieves the one or more beam settings adopted, according to the database, by the first base station in the time period. The means for reporting 250 reports the retrieved one or more beam settings in a response to the request (S250). I.e., the means for reporting 250 reports the beam settings adopted, according to the database, by the first base station in the time period.

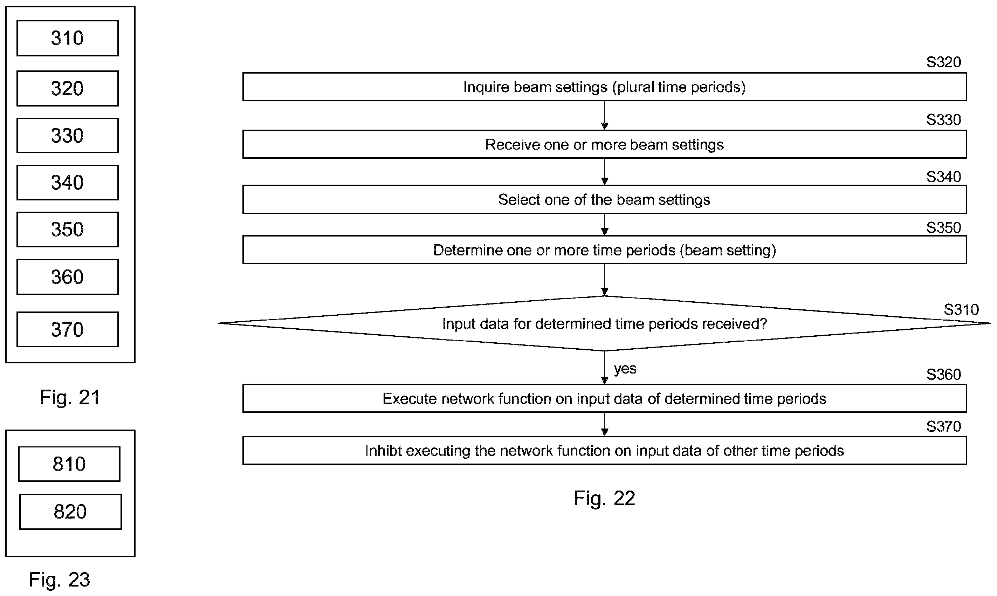

Fig. 21 shows an apparatus according to an example embodiment of the invention. The apparatus may be a network function, such as an analytics function (e.g. for mobility robustness optimization, a mobility load balancing, a traffic steering, a coverage optimization, and/or a capacity optimization), or an element thereof. Fig. 22 shows a method according to an example embodiment of the invention. The apparatus according to Fig. 21 may perform the method of Fig. 22 but is not limited to this method. The method of Fig. 21 may be performed by the apparatus of Fig. 22 but is not limited to being performed by this apparatus.

The apparatus comprises means for monitoring 310, means for inquiring 320, means for receiving 330, means for selecting 340, means for determining 350, means for executing 360, and means for inhibiting 370. The means for monitoring 310, means for inquiring 320, means for receiving 330, means for selecting 340, means for determining 350, means for executing 360, and means for inhibiting 370 may be a monitoring means, inquiring means, receiving means, selecting means, determining means, executing means, and inhibiting means, respectively. The means for monitoring 310, means for inquiring 320, means for receiving 330, means for selecting 340, means for determining 350, means for executing 360, and means for inhibiting 370 may be a monitor, inquirer, receiver, selector, determiner, executer, and inhibiter, respectively. The means for monitoring 310, means for inquiring 320, means for receiving 330, means for selecting 340, means for determining 350, means for executing 360, and means for inhibiting 370 may be a monitoring processor, inquiring processor, receiving processor, selecting processor, determining processor, executing processor, and inhibiting processor, respectively.

For each of the plural time periods, the means for inquiring 320 inquires, from a database such as a GSDB, one or more respective beam settings adopted by the base station within the respective time period (S320). In a response to the inquiring of S320, the means for receiving 330 receives, from the database, for each of the plural time periods, the one or more respective beam settings adopted by the base station within the respective time period (S330). The means for selecting 340 selects one of the beam settings (S340). According to the response of S330, the selected beam setting was adopted by the base station within at least one of the plural time periods. The means for determining 350 determines one or more of the plural time periods (S350). The means for determining 350 determines the one or more of the plural time periods such that, according to the response, the base station adopted the selected beam setting in the determined one or more of the plural time periods.

The means for monitoring 310 monitors whether, for each of the determined one or more time periods of the plural time periods, respective input data are received (S310).

S310 and the combination of S320, S330, S340, and S350 may be performed in an arbitrary sequence. They may be performed fully or partly in parallel. If S310 is performed prior to the combination of S320, S330, S340, and S350, the means for monitoring 310 may monitor whether respective input data are received for each of the plural time periods.

If the respective input data are received (at least) for each of the determined one or more time periods of the plural time periods (S310 = yes), the means for executing 360 executes a network function on the input data of the one or more time periods determined in S350 (S360). The means for inhibiting 370 inhibits the executing the network function on the input data of each of the plural time periods different from any of the determined one or more time periods (S370).

S360 and S370 may be performed in an arbitrary sequence. They may be performed fully or partly in parallel. In some example embodiments, S370 may be executed only if the respective input data are received

Fig. 23 shows an apparatus according to an example embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 18, 20, and 22 and related description.

Some example embodiments are explained with respect to a 5G network. However, the invention is not limited to 5G. It may be used in other mobile communication networks using beams, too, e.g. in previous of forthcoming generations of 3GPP networks such as 4G, 6G, or 7G, etc. It may be used in non-3GPP mobile communication networks using beams, too.

Some example embodiments are described for GoB BF, where a subset of preconfigured beams will be selected for transmission, e.g., by the scheduler of the distributed unit (DU). However, the invention is not limited to GoB (i.e. to preconfigured beams). Some example embodiments of the invention are applicable to Non-GoB based BF schemes, such as EBB or EZF BF, as long as a limited set of beam patterns is applied. Some example embodiments of the invention may be applicable even to fully analog beam forming, where measurements and adaptations are applicable for individual beams.

Some example embodiments are described under the assumption that the base station (e.g. gNB) is disaggregated into a CU, one or more DUs, and a respective RU for each of the DUs. However, the invention is not limited to disaggregated base stations. For example, RU and DU may be aggregated in a single device, or even CU, DU(s), and RU(s) may be aggregated in a single device.

Some example embodiments are described, wherein the records transmitted to the GSDB comprise an identifier of the base station. However, the invention is not limited thereto. For example, the GSDB may receive a bunch of records comprising time stamps and respective beam settings, but only a single identifier of the respective base station for all the records of the bunch. As still another example, the records may not comprise any identifier of the base station. For example, GSDB may derive the identifier from the source address (e.g. IP address) of the message comprising the record and a stored relationship between source addresses and base station identifiers.

Some example embodiments are described wherein the records indicate time windows during which the GoB setting was constant. Each time window may be defined by at least two of a begin of the time window, a duration of the time window, and an end of the time window. If the duration is predefined, each time window may be defined by only one of the begin of the time window and the end of the time window. However, the invention is not limited to time windows during which the GoB setting was constant. For example, instead of such time windows, there may be a specific record for each time (e.g. for each second). Thus, plural records may comprise the same GoB setting but different (potentially subsequent) time stamps.

Some example embodiments of the invention provide signalling that might be standardized as part of the above work item of O-RAN.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a base station (such as a gNB or eNB) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a network management system or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a record collector (such as a GoB record collector) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, an analytics function (such as a mobility robustness optimization, a mobility load balancing, a traffic steering, a coverage optimization, or a capacity optimization) or any other network function, or a component of any of these functions, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The phrase "at least one of A and B" comprises the options only A, only B, and both A and B. The terms "first X" and "second X" include the options that "first X" is the same as "second X" and that "first X" is different from "second X", unless otherwise specified.

## Claims

1. Method comprising:
inquiring, from a database, for each of plural time periods, one or more respective beam settings adopted by a base station within the respective time period;
receiving, from the database in a response to the inquiring, for each of the plural time periods, the one or more respective beam settings adopted by the base station within the respective time period;
selecting one of the beam settings, wherein, according to the response, the selected beam setting was adopted by the base station within at least one of the plural time periods;
the method **characterised in that** it further comprises
determining one or more of the plural time periods such that, according to the response, the base station adopted the selected beam setting in the determined one or more of the plural time periods;
monitoring whether, for each of the determined one or more time periods of the plural time periods, respective input data are received;
executing a network function on the input data of the determined one or more time periods if the respective input data are received for each of the determined one or more of the plural time periods;
inhibiting the executing the network function on the input data of each of the plural time periods different from any of the determined one or more time periods.

2. The method according to claim 1, wherein the determining the one or more of the plural time periods comprises determining all of the plural time periods when, according to the response, the base station adopted the selected beam setting.

3. The method according to any of claims 1 to 2, further comprising:
checking, for each of the determined time periods, if, according to the response, the base station adopted more than one beam settings in the respective determined time period;
inhibiting, for each of the determined time periods, the executing the network function on the input data of the determined time period if, according to the response, the base station adopted more than one beam settings in the respective determined time period.

4. The method according to any of claims 1 to 2, further comprising:
checking, for each of the determined time periods, if, according to the response, the base station adopted more than one beam settings in the respective determined time period; and,
for each of the determined time periods, if, according to the response, the base station adopted more than one beam settings in the respective determined time period:
determining a portion of the respective determined time period for which, according to the response, the base station adopted the selected beam setting in the respective determined time period;
weighting the input data of the respective determined time period by the determined portion; and
executing the network function on the weighted input data of the respective determined time period.

5. The method according to any of claims 1 to 4, wherein the response indicates, for each of the beam settings, a respective time window for which the base station adopted the respective beam setting.

6. The method according to any of claims 1 to 5, wherein the response comprises an identifier of the base station.

7. The method according to any of claims 1 to 6, further comprising:
checking if a result of the executing the network function depends on the beam settings;
inhibiting the inquiring if the result of the executing the network function does not depend on the beam settings.

8. The method according to any of claims 1 to 7, wherein the network function comprises an analytics function, and the analytics function comprises at least one of a mobility robustness optimization, a mobility load balancing, a traffic steering, a coverage optimization, and a capacity optimization.

9. Apparatus comprising:
means for inquiring, from a database, for each of plural time periods, one or more respective beam settings adopted by a base station within the respective time period;
means for receiving, from the database in a response to the inquiring, for each of the plural time periods, the one or more respective beam settings adopted by the base station within the respective time period; and
means for selecting one of the beam settings, wherein, according to the response, the selected beam setting was adopted by the base station within at least one of the plural time periods;
the apparatus **characterised in that** it further comprises:
means for determining one or more of the plural time periods such that, according to the response, the base station adopted the selected beam setting in the determined one or more of the plural time periods;
means for monitoring whether, for each of the determined one or more time periods of the plural time periods, respective input data are received;
means for executing a network function on the input data of the determined one or more time periods if the respective input data are received for each of the determined one or more of the plural time periods; and
means for inhibiting the executing the network function on the input data of each of the plural time periods different from any of the determined one or more time periods.

10. The apparatus according to claim 9, wherein the determining the one or more of the plural time periods comprises determining all of the plural time periods when, according to the response, the base station adopted the selected beam setting.

11. The apparatus according to any of claims 9 to 10, further comprising:
means for checking, for each of the determined time periods, if, according to the response, the base station adopted more than one beam settings in the respective determined time period; and
means for inhibiting, for each of the determined time periods, the executing the network function on the input data of the determined time period if, according to the response, the base station adopted more than one beam settings in the respective determined time period.

12. The apparatus according to any of claims 9 to 10, further comprising:
means for checking, for each of the determined time periods, if, according to the response, the base station adopted more than one beam settings in the respective determined time period; and,
for each of the determined time periods, if, according to the response, the base station adopted more than one beam settings in the respective determined time period:
means for determining a portion of the respective determined time period for which, according to the response, the base station adopted the selected beam setting in the respective determined time period;
means for weighting the input data of the respective determined time period by the determined portion; and
means for executing the network function on the weighted input data of the respective determined time period.

13. The apparatus according to any of claims 9 to 12, wherein the response indicates, for each of the beam settings, a respective time window for which the base station adopted the respective beam setting.

14. The apparatus according to any of claims 9 to 13, wherein the response comprises an identifier of the base station.

15. A computer program product comprising a set of instructions which, when executed on an apparatus, is configured to cause the apparatus to carry out the method according to any of claims 1 to 8.

## Patentansprüche

1. Verfahren, umfassend:
Abfragen, aus einer Datenbank, für jede einer Mehrzahl von Zeitperioden, einer oder mehrerer jeweiliger Strahleinstellungen, die von einer Basisstation innerhalb der jeweiligen Zeitperiode angenommen wurden;
Empfangen, aus der Datenbank in Antwort auf das Abfragen, für jede der Mehrzahl von Zeitperioden, der einen oder mehreren jeweiligen Strahleinstellungen, die von der Basisstation innerhalb der jeweiligen Zeitperiode angenommen wurden;
Auswählen einer der Strahleinstellungen, wobei gemäß der Antwort die ausgewählte Strahleinstellung von der Basisstation innerhalb mindestens einer der Mehrzahl von Zeitperioden angenommen wurde;
wobei das Verfahren **dadurch gekennzeichnet ist, dass** es ferner umfasst:
Bestimmen einer oder mehrerer der Mehrzahl von Zeitperioden derart, dass gemäß der Antwort die Basisstation die ausgewählte Strahleinstellung in der bestimmten einen oder den bestimmten mehreren der Mehrzahl von Zeitperioden angenommen hat;
Überwachen, ob für jede der bestimmten einen oder mehreren Zeitperioden der Mehrzahl von Zeitperioden jeweilige Eingabedaten empfangen werden;
Ausführen einer Netzwerkfunktion auf den Eingabedaten der bestimmten einen oder mehreren Zeitperioden, wenn die jeweiligen Eingabedaten für jede der bestimmten einen oder mehreren der Mehrzahl von Zeitperioden empfangen werden;
Unterbinden des Ausführens der Netzwerkfunktion auf den Eingabedaten jeder der Mehrzahl von Zeitperioden, die sich von der bestimmten einen oder den bestimmten mehreren Zeitperioden unterscheiden.

2. Verfahren nach Anspruch 1, wobei das Bestimmen der einen oder mehreren Zeitperioden der Mehrzahl von Zeitperioden das Bestimmen aller Zeitperioden der Mehrzahl von Zeitperioden umfasst, in denen gemäß der Antwort die Basisstation die ausgewählte Strahleinstellung angenommen hat.

3. Verfahren nach einem der Ansprüche 1 bis 2, ferner umfassend:
Prüfen, für jede der bestimmten Zeitperioden, ob gemäß der Antwort die Basisstation mehr als eine Strahleinstellung in der jeweiligen bestimmten Zeitperiode angenommen hat;
Unterbinden, für jede der bestimmten Zeitperioden, des Ausführens der Netzwerkfunktion auf den Eingabedaten der bestimmten Zeitperiode, wenn gemäß der Antwort die Basisstation mehr als eine Strahleinstellung in der jeweiligen bestimmten Zeitperiode angenommen hat.

4. Verfahren nach einem der Ansprüche 1 bis 2, ferner umfassend:
Prüfen, für jede der bestimmten Zeitperioden, ob gemäß der Antwort die Basisstation mehr als eine Strahleinstellung in der jeweiligen bestimmten Zeitperiode angenommen hat; und,
für jede der bestimmten Zeitperioden, wenn gemäß der Antwort die Basisstation mehr als eine Strahleinstellung in der jeweiligen bestimmten Zeitperiode angenommen hat:
Bestimmen eines Anteils der jeweiligen bestimmten Zeitperiode, für den gemäß der Antwort die Basisstation die ausgewählte Strahleinstellung in der jeweiligen bestimmten Zeitperiode angenommen hat;
Gewichten der Eingabedaten der jeweiligen bestimmten Zeitperiode mit dem bestimmten Anteil; und
Ausführen der Netzwerkfunktion auf den gewichteten Eingabedaten der jeweiligen bestimmten Zeitperiode.

5. Verfahren nach einem der Ansprüche 1 bis 4, wobei die Antwort für jede der Strahleinstellungen ein jeweiliges Zeitfenster angibt, in dem die Basisstation die jeweilige Strahleinstellung angenommen hat.

6. Verfahren nach einem der Ansprüche 1 bis 5, wobei die Antwort eine Kennung der Basisstation umfasst.

7. Verfahren nach einem der Ansprüche 1 bis 6, ferner umfassend:
Prüfen, ob ein Ergebnis des Ausführens der Netzwerkfunktion von den Strahleinstellungen abhängt;
Unterbinden des Abfragens, wenn das Ergebnis des Ausführens der Netzwerkfunktion nicht von den Strahleinstellungen abhängt.

8. Verfahren nach einem der Ansprüche 1 bis 7, wobei die Netzwerkfunktion eine Analysefunktion umfasst und die Analysefunktion mindestens eines von einer Mobilitätsrobustheitsoptimierung, einem Mobilitätslastausgleich, einer Verkehrssteuerung, einer Abdeckungsoptimierung und einer Kapazitätsoptimierung umfasst.

9. Vorrichtung, umfassend:
Mittel zum Abfragen, aus einer Datenbank, für jede einer Mehrzahl von Zeitperioden, einer oder mehrerer jeweiliger Strahleinstellungen, die von einer Basisstation innerhalb der jeweiligen Zeitperiode angenommen wurden;
Mittel zum Empfangen, aus der Datenbank in Antwort auf das Abfragen, für jede der Mehrzahl von Zeitperioden, der einen oder mehreren jeweiligen Strahleinstellungen, die von der Basisstation innerhalb der jeweiligen Zeitperiode angenommen wurden; und
Mittel zum Auswählen einer der Strahleinstellungen, wobei gemäß der Antwort die ausgewählte Strahleinstellung von der Basisstation innerhalb mindestens einer der Mehrzahl von Zeitperioden angenommen wurde;
wobei die Vorrichtung **dadurch gekennzeichnet ist, dass** sie ferner umfasst:
Mittel zum Bestimmen einer oder mehrerer der Mehrzahl von Zeitperioden derart, dass gemäß der Antwort die Basisstation die ausgewählte Strahleinstellung in der bestimmten einen oder den bestimmten mehreren der Mehrzahl von Zeitperioden angenommen hat;
Mittel zum Überwachen, ob für jede der bestimmten einen oder mehreren Zeitperioden der Mehrzahl von Zeitperioden jeweilige Eingabedaten empfangen werden;
Mittel zum Ausführen einer Netzwerkfunktion auf den Eingabedaten der bestimmten einen oder mehreren Zeitperioden, wenn die jeweiligen Eingabedaten für jede der bestimmten einen oder mehreren der Mehrzahl von Zeitperioden empfangen werden; und
Mittel zum Unterbinden des Ausführens der Netzwerkfunktion auf den Eingabedaten jeder der Mehrzahl von Zeitperioden, die sich von der bestimmten einen oder den bestimmten mehreren Zeitperioden unterscheiden.

10. Vorrichtung nach Anspruch 9, wobei das Bestimmen der einen oder mehreren Zeitperioden der Mehrzahl von Zeitperioden das Bestimmen aller Zeitperioden der Mehrzahl von Zeitperioden umfasst, in denen gemäß der Antwort die Basisstation die ausgewählte Strahleinstellung angenommen hat.

11. Vorrichtung nach einem der Ansprüche 9 bis 10, ferner umfassend:
Mittel zum Prüfen, für jede der bestimmten Zeitperioden, ob gemäß der Antwort die Basisstation mehr als eine Strahleinstellung in der jeweiligen bestimmten Zeitperiode angenommen hat; und
Mittel zum Unterbinden, für jede der bestimmten Zeitperioden, des Ausführens der Netzwerkfunktion auf den Eingabedaten der bestimmten Zeitperiode, wenn gemäß der Antwort die Basisstation mehr als eine Strahleinstellung in der jeweiligen bestimmten Zeitperiode angenommen hat.

12. Vorrichtung nach einem der Ansprüche 9 bis 10, ferner umfassend:
Mittel zum Prüfen, für jede der bestimmten Zeitperioden, ob gemäß der Antwort die Basisstation mehr als eine Strahleinstellung in der jeweiligen bestimmten Zeitperiode angenommen hat; und,
für jede der bestimmten Zeitperioden, wenn gemäß der Antwort die Basisstation mehr als eine Strahleinstellung in der jeweiligen bestimmten Zeitperiode angenommen hat:
Mittel zum Bestimmen eines Anteils der jeweiligen bestimmten Zeitperiode, für den gemäß der Antwort die Basisstation die ausgewählte Strahleinstellung in der jeweiligen bestimmten Zeitperiode angenommen hat;
Mittel zum Gewichten der Eingabedaten der jeweiligen bestimmten Zeitperiode mit dem bestimmten Anteil; und
Mittel zum Ausführen der Netzwerkfunktion auf den gewichteten Eingabedaten der jeweiligen bestimmten Zeitperiode.

13. Vorrichtung nach einem der Ansprüche 9 bis 12, wobei die Antwort für jede der Strahleinstellungen ein jeweiliges Zeitfenster angibt, in dem die Basisstation die jeweilige Strahleinstellung angenommen hat.

14. Vorrichtung nach einem der Ansprüche 9 bis 13, wobei die Antwort eine Kennung der Basisstation umfasst.

15. Computerprogrammprodukt, umfassend einen Satz von Anweisungen, der, wenn er auf einer Vorrichtung ausgeführt wird, konfiguriert ist, die Vorrichtung zu veranlassen, das Verfahren nach einem der Ansprüche 1 bis 8 auszuführen.

## Revendications

1. Procédé comprenant :
l'interrogation, à partir d'une base de données, pour chacune d'une pluralité de périodes de temps, d'un ou plusieurs réglages de faisceau respectifs adoptés par une station de base dans la période de temps respective ;
la réception, à partir de la base de données en réponse à l'interrogation, pour chacune de la pluralité de périodes de temps, du ou des réglages de faisceau respectifs adoptés par la station de base dans la période de temps respective ;
la sélection de l'un des réglages de faisceau, dans lequel, selon la réponse, le réglage de faisceau sélectionné a été adopté par la station de base pendant au moins l'une de la pluralité de périodes de temps ;
le procédé étant **caractérisé en ce qu'**il comprend en outre :
la détermination d'une ou plusieurs de la pluralité de périodes de temps de telle sorte que, selon la réponse, la station de base a adopté le réglage de faisceau sélectionné pendant la ou les périodes de temps déterminées de la pluralité de périodes de temps ;
la surveillance visant à déterminer si, pour chacune de la ou des périodes de temps déterminées de la pluralité de périodes de temps, des données d'entrée respectives sont reçues ;
l'exécution d'une fonction de réseau sur les données d'entrée de la ou des périodes de temps déterminées si les données d'entrée respectives sont reçues pour chacune de la ou des périodes de temps déterminées de la pluralité de périodes de temps ;
l'inhibition de l'exécution de la fonction de réseau sur les données d'entrée de chacune de la pluralité de périodes de temps différentes de la ou des périodes de temps déterminées.

2. Procédé selon la revendication 1, dans lequel la détermination de la ou des périodes de temps de la pluralité de périodes de temps comprend la détermination de toutes les périodes de temps de la pluralité de périodes de temps pendant lesquelles, selon la réponse, la station de base a adopté le réglage de faisceau sélectionné.

3. Procédé selon l'une quelconque des revendications 1 à 2, comprenant en outre :
la vérification, pour chacune des périodes de temps déterminées, si, selon la réponse, la station de base a adopté plus d'un réglage de faisceau dans la période de temps déterminée respective ;
l'inhibition, pour chacune des périodes de temps déterminées, de l'exécution de la fonction de réseau sur les données d'entrée de la période de temps déterminée si, selon la réponse, la station de base a adopté plus d'un réglage de faisceau dans la période de temps déterminée respective.

4. Procédé selon l'une quelconque des revendications 1 à 2, comprenant en outre :
la vérification, pour chacune des périodes de temps déterminées, si, selon la réponse, la station de base a adopté plus d'un réglage de faisceau dans la période de temps déterminée respective ; et,
pour chacune des périodes de temps déterminées, si, selon la réponse, la station de base a adopté plus d'un réglage de faisceau dans la période de temps déterminée respective :
la détermination d'une portion de la période de temps déterminée respective pour laquelle, selon la réponse, la station de base a adopté le réglage de faisceau sélectionné dans la période de temps déterminée respective ;
la pondération des données d'entrée de la période de temps déterminée respective par la portion déterminée ; et
l'exécution de la fonction de réseau sur les données d'entrée pondérées de la période de temps déterminée respective.

5. Procédé selon l'une quelconque des revendications 1 à 4, dans lequel la réponse indique, pour chacun des réglages de faisceau, une fenêtre de temps respective pendant laquelle la station de base a adopté le réglage de faisceau respectif.

6. Procédé selon l'une quelconque des revendications 1 à 5, dans lequel la réponse comprend un identifiant de la station de base.

7. Procédé selon l'une quelconque des revendications 1 à 6, comprenant en outre :
la vérification si un résultat de l'exécution de la fonction de réseau dépend des réglages de faisceau ;
l'inhibition de l'interrogation si le résultat de l'exécution de la fonction de réseau ne dépend pas des réglages de faisceau.

8. Procédé selon l'une quelconque des revendications 1 à 7, dans lequel la fonction de réseau comprend une fonction d'analyse, et la fonction d'analyse comprend au moins l'une parmi une optimisation de robustesse de mobilité, un équilibrage de charge de mobilité, un pilotage de trafic, une optimisation de couverture et une optimisation de capacité.

9. Appareil comprenant :
des moyens d'interrogation, à partir d'une base de données, pour chacune d'une pluralité de périodes de temps, d'un ou plusieurs réglages de faisceau respectifs adoptés par une station de base dans la période de temps respective ;
des moyens de réception, à partir de la base de données en réponse à l'interrogation, pour chacune de la pluralité de périodes de temps, du ou des réglages de faisceau respectifs adoptés par la station de base dans la période de temps respective ; et
des moyens de sélection de l'un des réglages de faisceau, dans lequel, selon la réponse, le réglage de faisceau sélectionné a été adopté par la station de base pendant au moins l'une de la pluralité de périodes de temps ;
l'appareil étant **caractérisé en ce qu'**il comprend en outre :
des moyens de détermination d'une ou plusieurs de la pluralité de périodes de temps de telle sorte que, selon la réponse, la station de base a adopté le réglage de faisceau sélectionné pendant la ou les périodes de temps déterminées de la pluralité de périodes de temps ;
des moyens de surveillance visant à déterminer si, pour chacune de la ou des périodes de temps déterminées de la pluralité de périodes de temps, des données d'entrée respectives sont reçues ;
des moyens d'exécution d'une fonction de réseau sur les données d'entrée de la ou des périodes de temps déterminées si les données d'entrée respectives sont reçues pour chacune de la ou des périodes de temps déterminées de la pluralité de périodes de temps ; et
des moyens d'inhibition de l'exécution de la fonction de réseau sur les données d'entrée de chacune de la pluralité de périodes de temps différentes de la ou des périodes de temps déterminées.

10. Appareil selon la revendication 9, dans lequel la détermination de la ou des périodes de temps de la pluralité de périodes de temps comprend la détermination de toutes les périodes de temps de la pluralité de périodes de temps pendant lesquelles, selon la réponse, la station de base a adopté le réglage de faisceau sélectionné.

11. Appareil selon l'une quelconque des revendications 9 à 10, comprenant en outre :
des moyens de vérification, pour chacune des périodes de temps déterminées, si, selon la réponse, la station de base a adopté plus d'un réglage de faisceau dans la période de temps déterminée respective ; et
des moyens d'inhibition, pour chacune des périodes de temps déterminées, de l'exécution de la fonction de réseau sur les données d'entrée de la période de temps déterminée si, selon la réponse, la station de base a adopté plus d'un réglage de faisceau dans la période de temps déterminée respective.

12. Appareil selon l'une quelconque des revendications 9 à 10, comprenant en outre :
des moyens de vérification, pour chacune des périodes de temps déterminées, si, selon la réponse, la station de base a adopté plus d'un réglage de faisceau dans la période de temps déterminée respective ; et,
pour chacune des périodes de temps déterminées, si, selon la réponse, la station de base a adopté plus d'un réglage de faisceau dans la période de temps déterminée respective :
des moyens de détermination d'une portion de la période de temps déterminée respective pour laquelle, selon la réponse, la station de base a adopté le réglage de faisceau sélectionné dans la période de temps déterminée respective ;
des moyens de pondération des données d'entrée de la période de temps déterminée respective par la portion déterminée ; et
des moyens d'exécution de la fonction de réseau sur les données d'entrée pondérées de la période de temps déterminée respective.

13. Appareil selon l'une quelconque des revendications 9 à 12, dans lequel la réponse indique, pour chacun des réglages de faisceau, une fenêtre de temps respective pendant laquelle la station de base a adopté le réglage de faisceau respectif.

14. Appareil selon l'une quelconque des revendications 9 à 13, dans lequel la réponse comprend un identifiant de la station de base.

15. Produit de programme informatique comprenant un ensemble d'instructions qui, lorsqu'elles sont exécutées sur un appareil, est configuré pour amener l'appareil à mettre en œuvre le procédé selon l'une quelconque des revendications 1 à 8.
